Europäisches Patentamt

European Patent Office

Office européen des brevets

(19)

(11) Veröffentlichungsnummer : **0 090 979**
**B1**

(12) ## EUROPÄISCHE PATENTSCHRIFT

(45) Veröffentlichungstag der Patentschrift :
27.07.88

(21) Anmeldenummer : 83102675.2

(22) Anmeldetag : 18.03.83

(51) Int. Cl.⁴ : **E 21 F 13/04**, B 65 G 53/30,
E 21 C 41/04

(54) **Förderflüssigkeit zum Transport von Kohle aus grossen Tiefen.**

(30) Priorität : 27.03.82 DE 3211459

(43) Veröffentlichungstag der Anmeldung :
12.10.83 Patentblatt 83/41

(45) Bekanntmachung des Hinweises auf die Patenterteilung : 27.07.88 Patentblatt 88/30

(84) Benannte Vertragsstaaten :
BE DE FR GB

(56) Entgegenhaltungen :
EP-A- 0 059 910

(73) Patentinhaber : BASF Aktiengesellschaft
Carl-Bosch-Strasse 38
D-6700 Ludwigshafen (DE)

(72) Erfinder : Wisseroth, Karl, Dr.
Brucknerstrasse 5
D-6700 Ludwigshafen (DE)

EP 0 090 979 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung bezieht sich auf eine Förderflüssigkeit zum Transport von Kohle aus tiefliegenden Flözen an die Erdoberfläche, bestehend aus einer konzentrierten wäßrigen Salzlösung einer Dichte von mindestens 1,39 g/cm³.

In der EP-A-0 059 910, die unter Artikel 54 (3) des EPÜ fällt, ist ein Verfahren zur Erschließung und Förderung von Kohle sehr tief liegender Flöze beschrieben, bei dem diese über ein oder mehrere Bohrlöcher von Flüssigkeit durchströmt werden und mittels der Flüssigkeit einerseits Sprengstoff an die Flöze herangeführt und andererseits die durch Sprengung gebrochene und zerkleinerte Kohle zur Erdoberfläche gefördert wird. Bei der Flüssigkeit handelt es sich um eine konzentrierte wäßrige Salzlösung, vorzugsweise um eine Kalziumchloridlösung mit einer Dichte von etwa 1,40 g/cm³, die schwerer als die Kohle, aber leichter als das Gebirge ist, in welchem die Kohle eingebettet ist. Durch Kreisführung der konzentrierten Salzlösung zwischen Unter- und Übertage wird die Förderung der in der Lösung aufschwimmenden Kohle bewerkstelligt.

Das einem Kohleflöz benachbarte Hangende und Liegende wird in der Regel durch mehr oder weniger starke Schichten aus Schiefer oder Tonschiefer gebildet. Durch das Herausbrechen und Abtransportieren der Kohle bildet sich im Flöz eine mit wäßriger Lösung gefüllte Kaverne, die wie das ursprüngliche Flöz vom Hangenden und Liegenden begrenzt wird. Im Kontakt mit Wasser neigen Schieferschichten, insbesondere wegen der eingelagerten Tonschichten, zur Wasseraufnahme, wodurch die zwischengelagerten Tonschichten anquellen und den Schiefer in tafelförmige Platten aufsprengen. Durch die zum Losbrechen der Kohle benötigten Sprengstoffdetonationen können solche im Hangenden gelockerte Platten schließlich herabbrechen und durch Haldenbildung in der Kaverne den weiteren Kohleabbau erschweren.

Es stellte sich daher die Aufgabe, Maßnahmen zu treffen, durch die das Eindringen von Wasser in die ein Kohleflöz begrenzenden Schieferschichten verhindert wird, um dadurch ein Herabbrechen von Platten aus dem Hangenden möglichst zu unterbinden.

Die Aufgabe wurde dadurch gelöst, daß der Förderflüssigkeit aus einer konzentrierten Salzlösung Stoffe mit einer großen Anzahl von Hydroxylgruppen im Molekül zugesetzt werden, die die restlichen von den Salzen nicht erfaßten Wassermoleküle immobilisieren.

Die erfindungsgemäße Lösung ist am Beispiel einer Förderflüssigkeit aus konzentrierter Kalziumchlorid-Lösung — im weiteren kurz als CaCl₂-Lösung bezeichnet — nachstehend näher erläutert.

Es ist zu beobachten, daß in Wasser eingelegte Schieferstücke bereits nach relativ kurzer Zeit — schon nach 10 bis 15 Minuten — in kleinere, plattenartige Teilstücke zerlegt werden. Hingegen tritt in einer konzentrierten CaCl₂-Lösung — und zwar je nach dem Grad der Konzentration — erst nach erheblich längeren Zeiten — etwa nach 4 bis 8 Stunden — eine Rißbildung an Schieferstücken in Erscheinung. Eine konzentrierte CaCl₂-Lösung verändert infolge ihrer Hygroskopizität beim Stehen an der Luft allerdings nach und nach ihre Konzentration. Mit zunehmendem Wassergehalt der Lösung nimmt aber auch die Mobilität der Wassermoleküle in der Lösung stetig zu.

So läßt sich durch Sättigen, z. B. mit wasserfreiem CaCl₂, eine wäßrige Lösung einer Dichte von 1,393 g/cm³ herstellen. Beim Stehen unter Abschluß von der atmosphärischen Luft kristallisiert ein festes Produkt der Dichte 1,417 g/cm³ aus, wobei praktisch alles vorhandene Wasser als Hydratwasser ($CaCl_2 \cdot 6\,H_2O$) gebunden wird. Bei einer solchen hochkonzentrierten bzw. gesättigten Lösung unterbleibt ein Eindringen von Flüssigkeit — insbesondere von Wasser — in angrenzenden Schiefer. Wegen der Hygroskopizität dieser Lösung kann jedoch beim offenen Einsatz als Förderflüssigkeit ein Eindringen von Wasser in die Schieferschichten nicht vermieden werden.

Setzt man nun der CaCl₂-Lösung Stoffe zu, die eine große Anzahl von Hydroxylgruppen im Molekül tragen, wie beispielsweise verschiedene Zuckerarten oder Stärke oder auch Polyvinylalkohole, so ist überraschenderweise selbst nach vielen Tagen keinerlei Eindringen von Wasser in die Schiefer- bzw. die darin eingelagerten Tonschichten zu beobachten. Beim Einsatz derartiger Förderflüssigkeiten werden somit keine Störungen durch herabbrechendes Gestein infolge quellender Schiefer- bzw. Tonschichten ausgelöst.

Als Zusatzstoff erweist sich in einer hochkonzentrierten CaCl₂-Lösung besonders Rohrzucker als sehr gut löslich. So können in einer in Bezug auf die CaCl₂-Konzentration etwa 40-prozentigen (Gewicht) Lösung (Dichte 1,39 g/cm³) noch gut 40 Prozent (Gewicht) Rohrzucker gelöst werden. Die Dichte einer solchen Lösung liegt dann bei etwa 1,42 g/cm³. Dabei ist Rohrzucker ein die Umwelt nicht belastender und beliebig sowie wirtschaftlich erzeugbarer Rohstoff.

## Patentansprüche

1. Förderflüssigkeit zum Transport von Kohle aus tiefliegenden Flözen an die Erdoberfläche, bestehend aus einer konzentrierten wäßrigen Salzlösung einer Dichte von mindestens 1,39 g/cm³, wobei der konzentrierten Salzlösung Stoffe mit einer großen Anzahl von Hydroxylgruppen im Molekül zugesetzt sind, die die restlichen, von den Salzen nicht erfaßten Wassermoleküle immobilisieren, so daß ein Eindringen des restlichen Wassers in den Kohleflözen benachbarte Schiefer- bzw. Tonschieferschichten verhindert wird.

2. Förderflüssigkeit nach Anspruch 1, in der als Zusatzstoff Rohrzucker verwendet wird.

## Claims

1. A conveying liquid for transporting coal from deep seams to the surface, consisting of a concentrated aqueous salt solution having a density of not less than 1.39 g/cm$^3$, wherein substances which have a large number of hydroxyl groups in the molecule are added to the concentrated salt solution, the said substances immobilizing the ramaining water molecules not associated with the salts, so that penetration of the remaining water into slate or clay slate strata adjacent to the coal seams is prevented.

2. A conveying liquid as claimed in claim 1, wherein sucrose is used as an additive.

## Revendications

1. Fluide porteur pour le transport de charbon de veines situées à de grandes profondeurs à la surface, constitué d'une solution aqueuse concentrée d'un sel, d'une masse volumique d'au moins 1,39 g/cm$^3$, à laquelle on incorpore des matières comprenant un grand nombre de groupes oxhydryle dans leur molécule, qui immobilisent les molécules d'eau résiduelles, non fixées par les sels, empêchant ainsi la pénétration de l'eau résiduelle dans les couches de schiste et de schiste argileux entourant les veines de charbon.

2. Fluide porteur suivant la revendication 1, dans lequel la matière ajoutée est du sucre de canne.